# FASCICULE DE BREVET EUROPEEN

(11) **EP 2 231 901 B1**
(45) Date de publication et mention de la délivrance du brevet: **11.05.2011**
(21) Numéro de dépôt: 08867056.7
(22) Date de dépôt: 22.12.2008
(51) Int. Cl.: C25B 9/04, H01M 8/02, F16J 15/08

(54) **LIAISON SOUPLE ETANCHE ENTRE UN SUBSTRAT METALLIQUE ET UN SUBSTRAT CERAMIQUE, PROCEDE DE REALISATION D'UNE TELLE LIAISON, APPLICATION DU PROCEDE A L'ETANCHEITE D'ELECTROLYSEURS HAUTE TEMPERATURE ET DES PILES A COMBUSTIBLE**
DICHTE FLEXIBLE VERBINDUNG ZWISCHEN EINEM METALLSUBSTRAT UND EINEM KERAMIKSUBSTRAT, VERFAHREN ZU IHRER HERSTELLUNG UND ANWENDUNG DES VERFAHRENS BEI DER ABDICHTUNG VON HOCHTEMPERATUR-ELEKTROLYSEUREN UND BRENNSTOFFZELLEN
SEALED FLEXIBLE LINK BETWEEN A METAL SUBSTRATE AND A CERAMIC SUBSTRATE, METHOD OF PRODUCING SUCH A LINK, AND APPLICATION OF THE METHOD TO SEALING HIGH-TEMPERATURE ELECTROLYZERS AND FUEL CELLS

(30) Priorité: 24.12.2007 FR 0760340
(43) Date de publication de la demande: 29.09.2010
(73) Titulaire: Commissariat à l'Énergie Atomique et aux Énergies Alternatives, 75015 Paris (FR)
(72) Inventeur: REYTIER, Magali, F-38000 Grenoble (FR); BUCCI, Philippe, F-38360 Engins (FR)
(74) Mandataire: Ilgart, Jean-Christophe
(86) Numéro de dépôt international: PCT/EP2008/068176
(87) Numéro de publication internationale: WO 2009/083539

(56) Documents cités:
- WO-A-2005/106999
- US-A- 4 642 864
- US-A- 5 532 073
- US-A1- 2003 132 270
- US-B1- 6 302 402

## Description

### DOMAINE TECHNIQUE

L'invention concerne généralement la réalisation d'une liaison souple étanche entre un substrat métallique et un substrat céramique.

Elle concerne en particulier l'étanchéité entre un interconnecteur métallique et un support céramique d'une cellule d'électrolyse aussi appelée cellule électrochimique.

Elle s'applique généralement aux liaisons céramique-métal fonctionnant à haute température.

Elle s'applique avantageusement aux électrolyseurs de vapeur d'eau à haute température (désigné usuellement et ci-après par EHT) utilisés pour la production d'hydrogène.

Elle peut également s'appliquer aux piles à combustibles fonctionnant à haute température (en, anglais : Solid Oxyde Fuel Cell désigné usuellement et ci-après par SOFC).

### ART ANTÉRIEUR

Les EHT sont des systèmes électrochimiques visant à produire de l'hydrogène à partir de l'électrolyse de l'eau entre 600°C et 1000°C. Ils représentent un des procédés de production d'hydrogène les plus prometteurs.

Ainsi, la demanderesse envisage de réaliser rapidement des électrolyseurs couplés à des sources thermiques non génératrices de gaz à effet de serre, notamment d'origine nucléaire, géothermique ou solaire.

Pour parvenir à des coûts de production compétitifs, une des options est d'électrolyser l'eau en phase vapeur et à température élevée. Pour cette technologie, la gestion des gaz et le maintien de l'étanchéité dans le temps constituent un des verrous majeurs.

En effet, pour les températures envisagées, on utilise une cellule électrochimique constituée d'un empilement tri-couche en céramique, dont un inconvénient est sa fragilité. Celle-ci peut limiter les efforts applicables. De plus, les matériaux d'électrolyte présentant des propriétés de conduction ionique faibles à basse température, il est nécessaire, en conséquence, d'élever la température de fonctionnement au dessus de 700°C pour limiter les pertes ohmiques. Cela engendre des difficultés pour la tenue des matériaux métalliques, notamment les plaques bipolaires et les joints. Si l'oxydation apparaît comme l'inconvénient majeur des hautes températures pour les plaques bipolaires, la tenue mécanique des joints est encore plus pénalisante.

Deux grandes familles d'architectures d'empilement existent : l'une dite tubulaire et l'autre planaire.

L'architecture tubulaire offre des possibilités d'étanchéité plus simples : le fond du tube constitue en lui-même une étanchéité. Mais elle présente l'inconvénient, entre autres, de générer des pertes ohmiques élevées dues à la longueur des lignes de courant.

L'architecture plane offre plus de perspectives pour les fortes puissances. L'empilement tri-couche en céramique entre deux interconnecteurs est plan mais les problèmes d'étanchéités sont alors plus importants que dans le cas de l'architecture tubulaire. Il est alors nécessaire de garantir une étanchéité entre chaque compartiment, c'est-à-dire respectivement entre l'interconnecteur anodique et la partie de la cellule contenant l'anode et entre l'interconnecteur cathodique et la partie de la cellule contenant la cathode. Garantir une étanchéité permet de ne pas avoir de recombinaison entre l'hydrogène et l'oxygène formés, mais aussi entre le système lui-même (cellule d'électrolyse et interconnecteurs anodique et cathodique) et le milieu extérieur. Le problème majeur posé pour réaliser ces étanchéités réside dans le fait qu'elles doivent tenir en température entre des matériaux métalliques et des matériaux céramiques. Ces matériaux céramiques présentent un faible coefficient de dilatation thermique (typiquement de l'ordre de 10.10⁻⁶/°C) et sont fragiles. La liaison étanche à réaliser doit alors être mise en oeuvre de manière à protéger la cellule, être suffisamment souple pour supporter le différentiel de dilatation, et aussi présenter une bonne tenue au fluage pour garantir le maintien de l'étanchéité, dans la durée, à haute température.

Les solutions de référence pour l'étanchéité de ces systèmes sont aujourd'hui à base de verre.

Cependant, dans l'état de développement actuel, ce type de joint présente un certain nombre d'inconvénients. Il est fragile en dessous de sa température de transition vitreuse et est susceptible de se rompre s'il est sollicité, notamment du fait des dilatations différentielles. Cela est confirmé par l'étude de Paul A. Lessing publiée dans la revue « Journal of Materials Science 42 (2007) ; pp 3465-3476 ».

Le verre crée aussi une liaison rigide entre les composants de l'empilement, générant des sollicitations lors des transitoires thermiques. De plus, lorsque les étanchéités sont réalisées à base de verre, le démontage des composants est difficile, voire impossible sans changer la cellule. En outre, le verre étant sensible à la gravité, les joints verticaux ou "au plafond" sont délicats à envisager. Le verre peut s'écouler lentement et réduire la durée de vie de l'assemblage et ne pas supporter les pressions modérées de quelques bars. Ces pressions seront à envisager à terme pour un EHT à application industrielle. Enfin, les verres ne sont pas toujours compatibles chimiquement avec les autres composants de la cellule et de(s) l'interconnecteur(s) et peuvent générer une corrosion importante des portées de joints.

Ces inconvénients conduisent à la recherche de solutions d'étanchéité alternatives qui sont mentionnées notamment dans l'étude de Paul A. Lessing ci-dessus.

D'autres solutions consistent à braser le métal de l'interconnecteur sur la céramique. Or, l'obtention du mouillage du métal de l'interconnecteur sur la céramique ainsi que les différences de dilatation thermique entre ces deux matériaux rendent cette opération très difficile pour des grandes dimensions. En effet, le refroidissement après la solidification de la brasure provoque régulièrement la rupture de la céramique.

Enfin, d'autres joints compressifs à base de mica, ou simplement métalliques, sont proposés : ils nécessitent un serrage extérieur à contrôler et à maintenir en température pour obtenir une étanchéité efficace sans rupture de la cellule en cours de chauffage.

Ainsi, dans l'art antérieur évoqué ci-dessus, le principe d'un compromis à trouver entre la déformabilité du joint métallique pour obtenir l'étanchéité et la tenue mécanique dans le temps est rappelé. Notamment, la recherche d'une souplesse du joint par la structure plus que par le matériau est évoquée, ainsi qu'une combinaison de matériaux élastiques et de matériaux plastifiant facilement pour remplir la fonction étanchéité. Cela étant, peu de résultats sont aujourd'hui proposés pour des joints métalliques applicables en SOFC et/ou EHT.

Le but de l'invention est alors de proposer un nouveau type de liaison entre un substrat métallique et un substrat céramique dont l'étanchéité est assurée efficacement à haute température, typiquement supérieure à 700°C et qui soit applicable dans des EHT et/ou des SOFC.

### EXPOSÉ DE L'INVENTION

A cet effet, l'invention a pour objet un dispositif entre un substrat métallique et un substrat céramique comprenant une gorge en contre-dépouille séparés l'un de l'autre par une liaison souple étanche dans lequel la liaison souple étanche comprend:
- un élément métallique comportant une extrémité reliée au substrat métallique et une autre extrémité logée dans la gorge du substrat céramique, l'élément métallique étant élastiquement déformable à la fois dans la gorge selon une direction radiale à cette dernière et, dans l'espace de séparation entre le substrat métallique et le substrat céramique selon la direction de séparation,
- une masse formant joint, de coefficient de dilatation thermique supérieur à celui du substrat céramique et collée à l'extrémité de l'élément métallique logée dans la gorge en contre-dépouille, le joint épousant avec contact direct une partie de la hauteur des parois latérales convergentes de cette dernière.

Par « collée», il faut comprendre ici et dans le cadre de l'invention, qu'il y a adhésion avec l'élément métallique déformable mais pas adhésion avec le substrat en céramique. La colle selon l'invention est une brasure lorsqu'elle est constituée par un métal, tel que de l'argent.

Avantageusement, au dessus de 700°C, le joint épouse avec serrage une partie de la hauteur des parois latérales convergentes de la gorge en contre-dépouille. Ainsi, lorsque la colle est une brasure, telle que l'argent, son coefficient de dilatation thermique étant plus fort que celui du substrat céramique, la brasure augmente de volume et vient se serrer contre les parois inclinées convergentes de la gorge en contre-dépouille en se déformant de manière plastique. On obtient ainsi, à coup sûr une étanchéité efficace lorsque le dispositif de liaison est utilisé dans un électrolyseur (EHT) ou une pile à combustible haute température (SOFC).

Selon un mode de réalisation avantageux, l'élément métallique et le substrat métallique constituent une pièce monobloc. Le métal du substrat métallique peut d'ailleurs comprendre un acier ferritique ou un alliage à base de nickel.

Selon une variante avantageuse, l'extrémité de l'élément métallique logée dans la gorge de l'élément céramique a une forme de crochet, l'intérieur du crochet étant dépourvu de la masse formant joint pour être élastiquement déformable selon la direction radiale de la gorge.

Selon une autre variante avantageuse, l'élément métallique comprend une partie en accordéon différente de celle logée dans la gorge du substrat céramique, l'accordéon étant élastiquement déformable selon la direction de séparation entre le substrat métallique et le substrat céramique.

Le substrat céramique peut être en zircone, de préférence yttriée.

La gorge en contre-dépouille peut avoir une section radiale en forme de queue d'aronde ou en forme de goutte.

La masse formant joint est avantageusement une brasure.

L'invention concerne également un électrolyseur haute température (EHT) comprenant au moins un dispositif décrit précédemment, dans lequel le substrat métallique constitue un interconnecteur cathodique et le substrat céramique constitue un support de cellule d'électrolyse.

Selon un mode de réalisation avantageux, l'EHT peut comprendre au moins deux dispositifs décrits précédemment, dans lequel un des deux substrats métalliques constitue un interconnecteur cathodique, l'autre des deux substrats métalliques constitue un interconnecteur anodique et dans lequel un seul substrat céramique est lié avec les interconnecteurs cathodique et anodique en constituant un support d'une seule cellule d'électrolyse.

Selon un mode de réalisation avantageux, le(s) substrat(s) céramique, l' (es) élément(s) métallique(s), la(es) gorge(s) en contre-dépouille et la(es) masse(s) ont chacun une forme annulaire, la liaison souple étant réalisée de manière continue le long des formes annulaires. Ce mode de réalisation est recherché quand on cherche à concevoir des EHT sous la forme d'une galette.

Pour être sûr de ne pas dégrader l'étanchéité lors du fonctionnement de l'EHT, le(s) joint(s) présente(nt) une température de fusion supérieure à la température de fonctionnement de l'électrolyseur d'au moins 50°C.

L'invention concerne également un procédé de réalisation d'une liaison souple étanche entre un substrat métallique et un substrat céramique dans lequel on réalise les étapes suivantes :
a/ réalisation d'une gorge en contre-dépouille dans le substrat céramique,
b/ liaison d'un élément métallique comprenant une partie élastiquement déformable selon une direction radiale et une autre partie élastiquement déformable selon une direction longitudinale avec le substrat métallique,
c/ remplissage d'une partie de la gorge avec une masse, la masse ayant un coefficient de dilatation thermique supérieur à celui du substrat céramique,
d/ insertion de la partie élastiquement déformable selon une direction radiale dans la gorge jusqu'à pénétrer la masse encore à l'état liquide,
d'/ échauffement de la masse jusqu'à son passage à l'état liquide,
e/ refroidissement de la masse jusqu'à une température provoquant sa solidification et son rétreint,
f/ écartement relatif entre les substrats métallique et céramique pour mettre l'élément métallique dans un état déformé élastiquement intermédiaire, l'écartement ayant lieu jusqu'à ce que la masse épouse avec contact direct une partie de la hauteur des parois latérales convergentes de la gorge.

Avantageusement, après l'étape f/, on réalise au moins une fois une étape de chauffage à une température au dessus de 700°C afin que la masse formant joint épouse avec serrage une partie de la hauteur des parois latérales convergentes de la gorge en contre-dépouille. Ainsi, le serrage recherché selon l'invention peut être obtenu directement lors de la montée en température d'un EHT ou d'une pile à combustible SOFC.

La masse est avantageusement une brasure, de préférence de l'argent.

Selon une caractéristique du procédé, la température à laquelle on réalise l'étape f/ peut être de l'ordre de la température ambiante.

L'invention concerne enfin une pile à combustible fonctionnant à haute température (SOFC) comprenant un dispositif tel que décrit ci-dessus.

### BRÈVE DESCRIPTION DES DESSINS

D'autres caractéristiques et avantages de l'invention seront mieux compris à la lecture de la description détaillée faite en référence aux figures suivantes parmi lesquelles :
- la figure 1 est une représentation schématique en coupe partielle transversale d'un dispositif selon l'invention implanté dans un électrolyseur haute température (EHT),
- la figure 1A est une vue de détail de la figure 1 montrant schématiquement la structure de la cellule d'électrolyse utilisée,
- les figures 2A à 2D sont des représentations schématiques également en coupe partielle transversale montrant les différentes étapes de réalisation du dispositif de liaison selon la figure 1.

### EXPOSÉ DÉTAILLÉ D'UN MODE DE RÉALISATION PARTICULIER

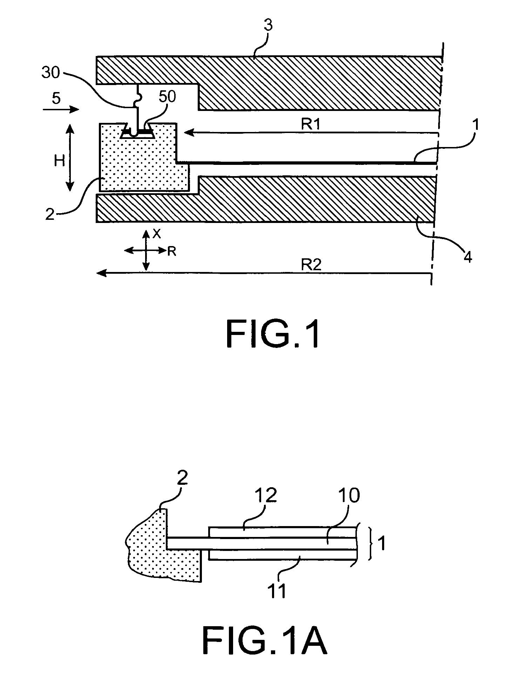

La solution d'étanchéité proposée est réalisée grâce à un dispositif tel que représenté schématiquement aux figures 1 à 2D dans un électrolyseur haute température EHT.

L'électrolyseur haute température EHT comprend une cellule d'électrolyse 1 supportée par un support en céramique 2 et prise en sandwich entre un interconnecteur cathodique 3 et un interconnecteur anodique 4 et une liaison étanche selon l'invention 5.

La cellule d'électrolyse 1 telle que représentée comprend un électrolyte 10 supporté directement par le support en céramique 2, et pris en sandwich entre une anode 11 et une cathode 12 (figure 1A).

Cette liaison 5 comporte un assemblage mécanique par frettage d'un joint métallique 50 de type mou à fort coefficient de dilatation brasé à une partie métallique 30 de l'interconnecteur cathodique 3 dans une gorge en contre-dépouille 20 pratiquée dans le support porte-cellule en céramique 2 favorisant le serrage en température. En quelque sorte, le sous-ensemble constitué par le joint métallique brasé à la partie métallique 30 de l'interconnecteur cathodique 3 constitue l'élément fretté tandis que, le porte-cellule en céramique constitue la frette.

Le joint métallique selon l'invention est obtenu par une brasure 50 attenante au métal de l'interconnecteur 30 mais ne réagissant pas ou peu avec la céramique 2, c'est-à-dire ne permettant pas l'accrochage définitif de la brasure 50 à la céramique 2.

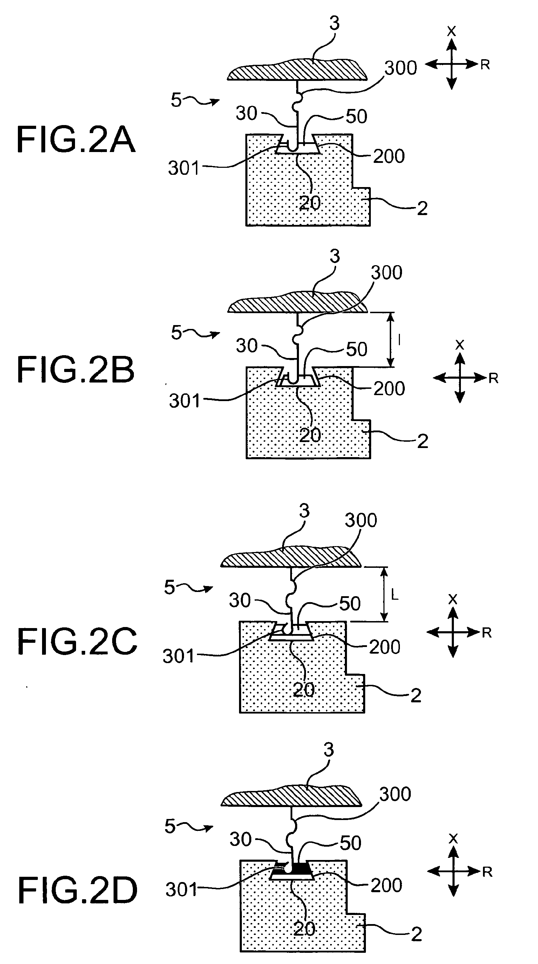

Le métal constituant la brasure 50 remplit la gorge en contre-dépouille 20 pratiquée dans le porte-céramique 2. La partie métallique 30 de l'interconnecteur cathodique 3 est positionnée avec une extrémité 301 logée dans la gorge en contre-dépouille 20 du porte-cellule 2 (figure 2A). La profondeur d'introduction est calculée pour que, lorsque la brasure est rendue liquide, elle ne pénètre pas à l'intérieur de l'extrémité 301. On élève ensuite la température de l'ensemble jusqu'à fusion de la masse (par exemple 1050°C pour de l'Argent).

Comme mentionné par la suite, selon l'invention, la partie métallique 30 de l'interconnecteur 3 est élastiquement déformable selon les deux directions R et X, c'est-à-dire d'une part radialement dans sa partie d'extrémité libre 300 logée dans la gorge 20 et d'autre part longitudinalement dans sa partie droite 301 selon la direction de séparation entre le porte-cellule 2 en céramique et la partie d'interconnexion de l'interconnecteur cathodique 3. La direction radiale R est la direction qui s'étend selon une section transversale de la gorge parallèle à sa base. La direction longitudinale X est la direction qui s'étend selon une transversale de la gorge orthogonale à sa base.

Une fois l'interconnecteur cathodique 3 positionné, on réalise le refroidissement jusqu'à solidification de la brasure avec un rétreint de ladite brasure 50 (figure 2B). La solidification et le retreint au refroidissement provoquent un jeu entre la brasure 50 et la gorge 20.

Puis, après refroidissement et solidification de la brasure, la position au montage à 20°C avec l'ensemble des pièces constituant l'EHT permet de faire remonter l'interconnecteur cathodique 3 (d'une distance 1 sur la figure 2B à une distance L sur la figure 2C) et donc, de mettre en contact direct le joint 50 et une partie de la hauteur des parois inclinées convergentes 200 de la gorge 20 sous forme de queue d'aronde de la céramique 2 (figure 2C). En déplaçant l'ensemble interconnecteur 3 et brasure 50 vers le haut de la gorge 20, on ramène ainsi en contact la brasure 50 sur les portées inclinées 200. Selon l'invention, des moyens souples, non montrés ici, agencés entre l'interconnecteur 3 et la cellule 1 permettent de garantir un contact électrique malgré le déplacement vertical vers le haut. Grâce à ce déplacement vertical, on déforme élastiquement la partie de liaison 30 de l'interconnecteur 3 dans un état de déformation intermédiaire, de manière à permettre au joint 50, ultérieurement et en fonctionnement à haute température, de cycler, voire de fluer.

Le chauffage jusqu'à la température de fonctionnement de l'EHT implique une dilatation plus importante de la brasure en métal 50 que celle de la céramique 2. Cela provoque un ajustement serré de la brasure 50 par ailleurs brasée à la partie métallique 30 dans la gorge 20 en queue d'aronde du porte-cellule 2. Le choix des dimensions et des matériaux doit selon l'invention conduire à la plastification de cette brasure pour obtenir l'étanchéité (figure 2D). Lors de la montée en température pour le fonctionnement, la dilatation importante de la brasure 50 provoque son serrage contre la gorge 20 et sa plastification nécessaire à l'obtention de l'étanchéité.

La partie de liaison 30 de l'interconnecteur 3 présente deux zones de souplesse: un crochet en bout 301 donnant une souplesse radiale et permettant de ne pas trop solliciter le porte-cellule 20 et un accordéon 300 en partie droite donnant une souplesse verticale de manière à garantir le contact sur les portées en biais 200 en cas de fluage de la brasure ou de cyclage thermique.

L'avantage de la solution proposée est d'obtenir l'étanchéité par la compression d'un métal mou entre l'interconnecteur 3 et un porte-cellule céramique 2 par frettage. On utilise alors le différentiel de dilatation entre la gorge 20 et son contenu pour obtenir le serrage nécessaire à l'étanchéité en évitant ainsi toute action extérieure par des vis ou autres.

Le porte-cellule en céramique 2 relativement épais permet d'envisager des serrages plus importants que sur la cellule d'électrolyse 1 elle-même. Le profil en biais 200 de la gorge 20 et le brasage 50 du côté métal 30 permet une tenue mécanique de l'ensemble à température ambiante pour le transport par exemple, le serrage nécessaire à l'étanchéité n'étant obtenu qu'à haute température.

La jonction entre la cellule 1 et le porte-cellule 2 est réalisée, dans le cadre de l'implantation dans un électrolyseur haute température ou une pile à combustible haute température, par une autre brasure ou par un scellement connu à base de verre. L'appui mutuel entre les interconnecteurs cathodique 3 et anodique 4 et la cellule 1 est réalisé par des moyens souples non montrés ici. Ces deux liaisons de jonction et d'appui mutuel peuvent être réalisées selon les techniques connues par l'homme du métier.

Dans la solution proposée, l'étanchéité est obtenue en plastifiant une brasure molle 50 entre la partie de liaison 30 de l'interconnecteur cathodique 3 et le support porte-cellule 2. Les efforts nécessaires à la plastification de cette brasure sont obtenus en cours de chauffage par la dilatation différentielle entre les éléments, la structure du porte-cellule 2 et celle de la partie de liaison 30 de l'interconnecteur 3 favorisant cette sollicitation et son maintien dans le temps.

Selon le mode de réalisation illustré, le porte-cellule est une pièce massive en zircone yttriée. Tout matériau isolant électrique résistant à une température de 1050°C (dans le cas d'une brasure en argent) peut être utilisé. Le support porte-cellule 2 permet de fixer l'électrolyte de la cellule 1 sur un support sans la solliciter au chauffage (puisqu'il s'agit du même matériau) et de développer une solution d'étanchéité avec des dimensions millimétriques, solution inaccessible avec la cellule 1 seule à cause de sa faible épaisseur. Enfin, le support 2 prévu selon l'invention permet d'envisager des efforts de serrage bien supérieurs à ceux envisageables sur la cellule seule 1, ce qui permet au joint métallique 50 d'être plastifié et serré pour obtenir l'étanchéité recherchée dans le cadre de l'invention.

La forme de la gorge 20 en contre-dépouille peut être réalisée par prototypage rapide, ou tout autre procédé permettant de former et de fritter cette forme particulière. Telle que représentée, la queue d'aronde 20 permet d'obtenir un serrage par la dilatation différentielle de la gorge et de son contenu, mais aussi de garantir ce serrage en cas de cyclage thermique. Le contact à chaque cycle se fait alors sur un point différent ce qui permet de plastifier à chaque cycle la brasure et de conserver l'étanchéité au réchauffage.

Selon le mode de réalisation illustré, le matériau de l'interconnecteur cathodique 3 est un acier ferritique à 22% de Chrome désigné commercialement par Crofer 22APU, réputé pour sa tenue à la corrosion en atmosphère SOFC. D'autres aciers inoxydables ou d'alliages à base de Nickel peuvent aussi être envisagés. Il faut alors s'assurer que l'épaisseur dudit interconnecteur cathodique 3 est suffisamment faible pour ne pas trop solliciter le porte-cellule 2 au refroidissement, car les coefficients de dilatation de ces autres matériaux envisagés peuvent alors être bien différents de celui du porte-cellule 2.

Comme mentionné précédemment, l'élément métallique envisagé selon l'invention en tant que partie de liaison 30 est élastiquement déformable par le crochet 301 et l'accordéon 300 selon le mode de réalisation illustré. Une telle déformation élastique ainsi prévue permet d'emmagasiner de l'énergie élastique nécessaire au maintien de l'étanchéité si la brasure 50 flue. Cela garantit le maintien de l'effort de contact entre la brasure 50 et les bords inclinés convergents 200 de la gorge 20, à la fois dans le sens radial R et dans le sens axial X. De plus, ces deux éléments de souplesse 300,301 permettent de ne pas trop solliciter le porte-cellule 2 lors de la forte dilatation de la brasure 50 en température de fonctionnement de l'électrolyseur haute température.

Le joint métallique 5 est dans le mode de réalisation illustré constitué d'une brasure molle à fort coefficient de dilatation, de type Argent. Tout autre alliage métallique fondant à une température supérieure à 800°C et ne réagissant pas avec le matériau du porte-cellule peut être envisagé dans le cadre de l'invention. Quel que soit le matériau envisagé pour la brasure 50, celle-ci doit adhérer parfaitement au métal de la liaison 30 de l'interconnecteur 3 et peut ne pas réagir avec le matériau de de la gorge 20, tel que la zircone yttriée dans le mode de réalisation illustré. En effet, la solution proposée ne nécessite pas l'accrochage de la brasure 50 sur la céramique, voire requiert le glissement du joint 5 le long des flancs inclinés 200 de la gorge 20 pour augmenter le serrage recherché dans le cadre de l'invention. Le choix de la brasure et de sa température de fusion, dépend évidemment de la température de fonctionnement visée pour la liaison étanche à réaliser.

D'autres améliorations peuvent être envisagées sans pour autant sortir du cadre de l'invention.

Ainsi, la liaison selon l'invention a été décrite en référence avec les figures pour étancher le compartiment cathodique et ne pas perdre l'hydrogène produit dans un EHT. La liaison peut tout aussi être reproduite côté anodique en réalisant une gorge symétrique dans le porte-cellule, et en réalisant ainsi l'étanchéité côté oxygène.

La liaison 5 telle que représentée l'est dans un EHT de forme générale annulaire et les dimensions sont de l'ordre de R1 = 60mm, R2 = 70 mm et H = 10mm. On peut tout aussi bien réaliser une liaison dans un EHT de forme générale rectangulaire ou autre avec des dimensions de même grandeur ou différentes.

## Revendications

1. Dispositif comprenant un substrat métallique (3) et un substrat céramique (2) comprenant une gorge (20) en contre-dépouille séparés l'un de l'autre par une liaison souple étanche (5), dans lequel liaison souple étanche (5) comprend:
- un élément métallique (30) comportant une extrémité (300) reliée au substrat métallique et une autre extrémité (301) logée dans la gorge du substrat céramique, l'élément métallique étant élastiquement déformable à la fois dans la gorge selon une direction radiale (R) à cette dernière et, dans l'espace de séparation entre le substrat métallique et le substrat céramique selon la direction de séparation (X),
- une masse (50) formant joint, de coefficient de dilatation thermique supérieur à celui du substrat céramique et collée à l'extrémité de l'élément métallique logée dans la gorge en contre-dépouille, le joint épousant avec contact direct une partie de la hauteur des parois latérales convergentes (200) de cette dernière (20).

2. Dispositif selon la revendication 1, dans lequel, au dessus de 700°C, le joint est en ajustement serré contre une partie de la hauteur des parois latérales convergentes (200) de la gorge en contre-dépouille.

3. Dispositif selon la revendication 1 ou 2, dans lequel l'élément métallique et le substrat métallique constituent une pièce monobloc.

4. Dispositif selon l'une des revendications 1 à 3, dans lequel l'extrémité de l'élément métallique logée dans la gorge de l'élément céramique a une forme de crochet (301), l'intérieur du crochet étant dépourvu de la masse formant joint pour être élastiquement déformable selon la direction radiale de la gorge.

5. Dispositif selon l'une quelconque des revendications 1 à 4, dans lequel l'élément métallique comprend une partie en accordéon (300) différente de celle logée dans la gorge du substrat céramique, l'accordéon (300) étant élastiquement déformable selon la direction de séparation entre le substrat métallique et le substrat céramique.

6. Dispositif selon l'une quelconque des revendications précédentes, dans lequel le métal du substrat métallique comprend un acier ferritique ou un alliage à base de nickel.

7. Dispositif selon l'une quelconque des revendications précédentes, dans lequel le substrat céramique est en zircone, de préférence yttriée.

8. Dispositif selon l'une quelconque des revendications précédentes, dans lequel la gorge en contre-dépouille a une section radiale en forme de queue d'aronde (20) ou en forme de goutte.

9. Dispositif selon l'une quelconque des revendications précédentes, dans lequel la masse formant joint (50) est une brasure.

10. Electrolyseur haute température (EHT) comprenant au moins un dispositif (5) selon l'une quelconque des revendications précédentes, dans lequel le substrat métallique (3) constitue un interconnecteur cathodique et le substrat céramique (2) constitue un support de cellule d'électrolyse (1, 10).

11. Electrolyseur haute température comprenant au moins deux dispositifs (5) selon l'une quelconque des revendications 1 à 9, dans lequel un des deux substrats métalliques constitue un interconnecteur cathodique, l'autre des deux substrats métalliques constitue un interconnecteur anodique et dans lequel un seul substrat céramique est lié avec les interconnecteurs cathodique et anodique en constituant un support d'une seule cellule d'électrolyse.

12. Electrolyseur haute température selon la revendication 10 ou 11, dans lequel le(s) substrat(s) céramique, l' (es) élément(s) métallique(s), la(es) gorge(s) en contre-dépouille et la(es) masse(s) ont chacun une forme annulaire, la liaison souple étant réalisée de manière continue le long des formes annulaires.

13. Electrolyseur haute température selon l'une des revendications 10 à 12, dans lequel le(s) joint(s) présente(nt) une température de fusion supérieure d'au moins 50°C à la température de fonctionnement de l'électrolyseur.

14. Procédé de réalisation d'une liaison souple étanche (5) entre un substrat métallique (3) et un substrat céramique (2) dans lequel on réalise les étapes suivantes :
a/ réalisation d'une gorge (20) en contre-dépouille dans le substrat céramique (2),
b/ liaison d'un élément métallique (30) comprenant une partie élastiquement déformable selon une direction radiale (301) et une autre partie élastiquement déformable selon une direction longitudinale (300) avec le substrat métallique,
c/ remplissage d'une partie de la gorge avec une masse (50), la masse ayant un coefficient de dilatation thermique supérieur à celui du substrat céramique,
d/ insertion de la partie élastiquement déformable (301) selon une direction radiale (R) dans la gorge jusqu'à une profondeur telle qu'après l'étape d'/ l'extrémité (301) ne se remplisse pas de masse liquide,
d'/ échauffement de la masse jusqu'à son passage à l'état liquide,
e/ refroidissement de la masse jusqu'à une température provoquant sa solidification et son rétreint,
f/ écartement relatif entre les substrats métallique (3) et céramique (2) pour mettre l'élément métallique (30) dans un état déformé élastiquement intermédiaire, l'écartement ayant lieu jusqu'à ce que la masse (50) épouse avec contact direct une partie de la hauteur des parois latérales convergentes (200) de la gorge (20).

15. Procédé selon la revendication 14, dans lequel, après l'étape f/, on réalise au moins une fois une étape de chauffage à une température au dessus de 700°C afin que la masse formant joint (50) épouse avec ajustement serré une partie de la hauteur des parois latérales convergentes (200) de la gorge en contre-dépouille (20).

16. Procédé selon la revendication 14 ou 15, dans lequel la masse est une brasure (50).

17. Procédé selon la revendication 16, dans lequel la brasure est de l'argent.

18. Procédé selon l'une des revendications 14 à 17, dans lequel la température à laquelle on réalise l'étape f/ est de l'ordre de la température ambiante.

19. Pile à combustible fonctionnant à haute température (SOFC) comprenant un dispositif selon l'une quelconque des revendications 1 à 9.

## Claims

1. A device comprising a metal substrate (3) and a ceramic substrate (2) comprising a back-tapered groove (20) separated from each other by a sealed flexible link (5), wherein the sealed flexible link (5) comprises:
- a metal element (30) including an end (300) connected to the metal substrate and another end (301) housed in the groove of the ceramic substrate, the metal element being elastically deformable both in the groove along a direction radial (R) to the latter and, in the separation space between the metal substrate and the ceramic substrate along the separation direction X,
- a joint-forming mass (50) with a greater thermal expansion coefficient than that of the ceramic substrate and adhesively bonded to the end of the metal element housed in the back-tapered groove, the joint fitting with direct contact a portion of the height of the convergent sidewalls (200) of the latter (20).

2. The device according to claim 1, wherein above 700°C, the joint is tightly adjusted against a portion of the height of the convergent sidewalls (200) of the back-tapered groove.

3. The device according to claim 1 or 2, wherein the metal element and the metal substrate form a part in a single piece.

4. The device according to any of claims 1 to 3, wherein the end of the metal element housed in the groove of the ceramic element has the shape of a hook (301), the interior of the hook being without the joint-forming mass so as to be elastically deformable along the radial direction of the groove.

5. The device according to any of claims 1 to 4, wherein the metal element comprises a folding accordion portion (300) different from the one housed in the groove of the ceramic substrate, the accordion (300) being elastically deformable along the separation direction between the metal substrate and the ceramic substrate.

6. The device according to any of the preceding claims, wherein the metal of the metal substrate comprises ferritic steel or a nickel-based alloy.

7. The device according to any of the preceding claims, wherein the ceramic substrate is in zirconia, preferably yttriated zirconia.

8. The device according to any of the preceding claims, wherein the back-tapered groove has a radial section in the form of a dovetail (20) or in the form of a drop.

9. The device according to any of the preceding claims, wherein the joint-forming mass (50) is a brazing solder.

10. A high temperature electrolyzer (HTE) comprising at least one device (5) according to any of the preceding claims, wherein the metal substrate (3) forms a cathode interconnector and the ceramic substrate (2) forms an electrolysis cell support (1, 10).

11. The high temperature electrolyzer comprising at least two devices (5) according to any of claims 1 to 9, wherein one of the two metal substrates forms a cathode interconnector, the other one of the two metal substrates forms an anode interconnector and wherein a single ceramic substrate is connected with the cathode and anode interconnectors by forming a support of a single electrolysis cell.

12. The high temperature electrolyzer according to claim 10 or 11, wherein the ceramic substrate(s), the metal element (s), the back-tapered groove(s) and the mass(s) each have an annular shape, the flexible link being continuously made along the annular shapes.

13. The high temperature electrolyzer according to any of claims 10 to 12, wherein the joint (s) has (have) a melting temperature greater than the operating temperature of the electrolyzer by at least 50°C.

14. A method for making a sealed flexible link (5) between a metal substrate (3) and a ceramic substrate (2) wherein the following steps are carried out:
a/ making a back-tapered groove (20) in the ceramic substrate (2),
b/ linking a metal element (30) comprising an elastically deformable portion along a radial direction (301) and another elastically deformable portion along a longitudinal direction (300) with the metal substrate,
c/ filling a portion of the groove with a mass (50), the mass having a greater thermal expansion coefficient than that of the ceramic substrate,
d/ inserting the elastically deformable portion (301) along a radial direction (R) into the groove down to a depth such that after step d'/ the end (301) is not filled with liquid mass,
d'/ heating the mass until it passes into the liquid state,
e/ cooling the mass down to a temperature causing its solidification and its necking,
f/ relatively moving the metal (3) and ceramic (2) substrates apart in order to put the metal element (30) in an intermediate elastically deformed state, the separation taking place until the mass (50) fits with direct contact a portion of the height of the convergent sidewalls (200) of the groove (20).

15. The method according to claim 14, wherein, after step f/, a step for heating to a temperature above 700°C is carried out at least once so that the joint-forming mass (50) tightly fits a portion of the height of the convergent sidewalls (200) of the back-tapered groove (20).

16. The method according to claim 14 or 15, wherein the mass is a brazing solder (50).

17. The method according to claim 16, wherein the brazing solder is silver.

18. The method according to any of claims 14 to 17, wherein the temperature at which step f/ is carried out is of the order of room temperature.

19. A fuel cell operating at high temperature (SOFC) comprising a link according to any of claims 1 to 9.

## Patentansprüche

1. Vorrichtung, umfassend ein metallisches Substrat (3) und ein keramisches Substrat (2), umfassend eine hinterschnittene Nut (20), getrennt voneinander durch eine flexible, dichte Verbindung (5), worin die flexible, dichte Verbindung umfasst:
- ein metallisches Element (30), das ein Ende (300) aufweist, das mit dem metallischen Substrat verbunden ist, und ein anderes Ende (301), das in der Nut des keramischen Substrats angeordnet ist, wobei das metallische Element in der Nut zugleich elastisch verformbar ist in einer radialen Richtung (R) zu der letzteren und im Zwischenraum zwischen dem metallischen Substrat und dem keramischen Substrat in Richtung des Zwischenraums (X),
- eine verbindungsbildende Masse (50), mit einem thermischen Ausdehnungskoeffizienten, der über dem des keramischen Substrats liegt, und aufgeklebt ist auf das Ende des metallischen Elements, das in der hinterschnittenen Nut angeordnet ist, wobei die Verbindung in direktem Kontakt mit einem Teil der Höhe der konvergierenden Seitenwände (200) der letzteren angeordnet ist.

2. Vorrichtung nach Anspruch 1, worin unter 700 °C die Verbindung eng angepasst ist gegen einen Teil der Höhe der konvergierenden Seitenwände (200) der hinterschnittenen Nut.

3. Vorrichtung nach Anspruch 1 oder 2, worin das metallische Element und das metallische Substrat ein Monoblockstück bilden.

4. Vorrichtung nach einem der Ansprüche 1 bis 3, worin das Ende des metallischen Elements, das in der Nut des keramischen Elements angeordnet ist, die Form eines Hakens (301) hat, wobei das Innere des Hakens frei von der Masse ist, die eine Verbindung bildet, um elastisch verformbar in radialer Richtung der Nut zu sein.

5. Vorrichtung nach einem der Ansprüche 1 bis 4, worin das Ende des metallische Elements einen flexiblen Teil (300) umfasst, der verschieden ist von dem, der in der Nut des keramischen Substrats angeordnet ist, wobei der flexible Teil (300) elastisch verformbar ist in der Zwischenraumrichtung zwischen dem metallischen Substrat und dem keramischen Substrat.

6. Vorrichtung nach einem der vorhergehenden Ansprüche, worin das Metall des metallischen Substrats ein Ferritstahl oder eine Nickellegierung umfasst.

7. Vorrichtung nach einem der vorhergehenden Ansprüche, worin das keramische Substrat aus Zirkon, vorzugweise mit Yttrium, ist.

8. Vorrichtung nach einem der vorhergehenden Ansprüche, worin die hinterschnittene Nut einen radialen Abschnitt aufweist in der Form eines Schwalbenschwanzes (20) oder in Tropfenform.

9. Vorrichtung nach einem der vorhergehenden Ansprüche, worin die Masse, die die Verbindung (50) bildet, ein Lot ist.

10. Hochtemperatur-Elektrolysevorrichtung (EHT), umfassend mindestens eine Vorrichtung (5) nach einem der vorhergehenden Ansprüche, worin das metallische Substrat (3) einen Kathodenseparator bildet und das keramische Substrat (2) einen Träger einer Elektrolysezelle (1, 10) bildet.

11. Hochtemperatur-Elektrolysevorrichtung (EHT), umfassend mindestens zwei Vorrichtungen (5) nach einem der Ansprüche 1 bis 9, worin eines von zwei metallischen Substraten einen Kathodenseparator bildet, das andere der beiden metallischen Substrate einen Anodenseparator bildet, und worin ein einzelnes keramisches Substrat mit den Katoden- und Anodenseparatorn in Verbindung steht, um einen Träger einer einzelnen Elektrolysezelle zu bilden.

12. Hochtemperatur-Elektrolysevorrichtung nach Anspruch 10 oder 11, worin das (die) keramische(n) Substrat(e), das (die) metallische (n) Element(e), die hinterschnittene (n) Nut(en) und die Masse(n) jeweils eine ringförmige Form haben, wobei die flexible Verbindung kontinuierlich entlang der ringförmigen Formen realisiert wird.

13. Hochtemperatur-Elektrolysevorrichtung nach einem der Ansprüche 10 bis 12, worin die Verbindung(en) eine Schmelztemperatur von mindestens 50°C über der Betriebstemperatur der Elektrolysevorrichtung zeigt (zeigen).

14. Verfahren zum Realisieren einer flexiblen, dichten Verbindung (5) zwischen einem metallischen Substrat (3) und einem keramischen Substrat (2), worin die folgenden Schritte ausgeführt werden:
a) Bereitstellen einer hinterschnittenen Nut (20) in dem keramischen Substrat (2),
b) Verbinden eines metallischen Elements (30), umfassend einen in einer radialen Richtung verformbaren elastischen Teil (301) und einen anderen Teil (300), der in eine Längsrichtung elastisch verformbar ist mit dem metallischen Substrat,
c) Füllen eines Teils der Nut mit einer Masse (50), wobei die Masse einen thermischen Ausdehnungskoeffizienten aufweist, der über dem des keramischen Substrats liegt,
d) Einbringen des elastisch verformbaren Teils (301) in einer radialen Richtung (R) in die Nut bis in eine solche Tiefe, sodass sich nach dem Schritt d' das Ende (301) nicht mit flüssiger Masse füllt,
d') Erhitzen der Masse bis zu ihrem Übergang in den flüssigen Zustand,
e) Abkühlen der Masse bis auf eine Temperatur, die ihre Verfestigung und Schrumpfung verursacht,
f) Bilden eines relativen Zwischenraums zwischen den metallischen (3) und den keramischen (2) Substraten, um das metallische Element (30) in einen Zwischenzustand elastischer Verformung überzuführen, wobei der Zwischenraum bis zur Masse (50) ist, die in direktem Kontakt mit einem Teil der Höhe der konvergenten Seitenwände (200) der Nut (20) ist.

15. Verfahren nach Anspruch 14, worin nach Schritt f) mindestens ein Erhitzungsschritt auf eine Temperatur über 700 °C erfolgt, sodass die Masse, die die Verbindung (50) bildet, sich anpasst mit festem Sitz an einen Teil der Höhe der konvergierenden Seitenwände (200) der hinterschnittenen Nut (22).

16. Verfahren nach Anspruch 14 oder 15, worin die Masse ein Lot (50) ist.

17. Verfahren nach Anspruch 16, wobei das Lot Silber ist.

18. Verfahren nach einem der Ansprüche 14 bis 17, worin die Temperatur, bei welcher Schritt f) erfolgt, etwa Raumtemperatur ist.

19. Hochtemperatur-Brennstoffzelle (SOFC), umfassend eine Vorrichtung nach einem der Ansprüche 1 bis 9.
